# EUROPEAN PATENT APPLICATION

(11) **EP 2 391 025 A1**
(43) Date of publication of application: **30.11.2011**
(21) Application number: 11167238.2
(22) Date of filing: 24.05.2011
(51) Int. Cl.: H04B 1/16, H04L 25/03, H04W 52/02

(54) **Bluetooth inquiry signal detection circuit and method**

(30) Priority: 31.05.2010 JP 2010125130
(71) Applicant: Kabushiki Kaisha Toshiba, Tokyo 105-8001 (JP)
(72) Inventor: Yamazaki, Mitsuo, Tokyo 105-8001 (JP)
(74) Representative: HOFFMANN EITLE

(57) **Abstract**

According to one embodiment, an electronic apparatus includes an antenna (21), a wireless communication module (20) and a power saving controller (22). The module (20) executes wireless communication using the antenna (21). The controller (22) turns on the module (20) in a power-off state when a predetermined signal formed by a predetermined frequency component is received via the antenna (21). The controller (22) comprises a bandpass filter (223, 224), a pulse width detector (222) and a pulse width changing module (221). The filter (223, 224) detects the predetermined frequency component. The detector (222) detects a pulse width of a received signal via the antenna (21). The module (221) changes the pulse width of the received signal to be supplied to the filter (223, 224) to a pulse width not more than a predetermined pulse width, when the detected pulse width of the received signal exceeds the predetermined pulse width.

## Description

Embodiments described herein relate generally to a signal detection technique of detecting, e.g., an inquiry signal of Bluetooth (registered trademark).

Recently, electronic apparatuses including a wireless communication function capable of transmitting and receiving data without performing any connecting operation using a cable or the like become widespread. Bluetooth (registered trademark) is one wireless communication executed by electronic apparatuses of this kind.

In Bluetooth (registered trademark), an inquiry signal is detected in order to check the existence of a Bluetooth (registered trademark) signal. The inquiry signal of Bluetooth (registered trademark) is formed by frequency components of 800 Hz and 3.2 kHz. As a method of detecting a predetermined signal formed by a predetermined signal component like the inquiry signal of Bluetooth (registered trademark), a method of detecting the predetermined frequency component by a bandpass filter is widely used.

A normal communication signal (D1 packet) of Bluetooth (registered trademark) is formed by a frequency component of 800 Hz. In normal communication of Bluetooth (registered trademark), it is well possible that the duty fluctuation of the pulse of a transmission signal occurs due to the influence of a transmission channel. In some cases, therefore, a frequency component of 3.2 kHz of the normal communication signal may increase and may be detected (together with 800 Hz) by a bandpass filter, thereby causing false detection of the inquiry signal.

The invention has been made in consideration of the above situation, and has as its object to provide an electronic apparatus, signal detection circuit, and signal detection method capable of preventing, e.g., the normal communication signal of Bluetooth (registered trademark) from being falsely detected as the inquiry signal.

A general architecture that implements the various features of the embodiments will now be described with reference to the drawings. The drawings and the associated descriptions are provided to illustrate the embodiments and not to limit the scope of the invention.
FIG. 1 is an exemplary view showing the system configuration of an electronic apparatus of an embodiment.
FIG. 2 is an exemplary view showing the functional blocks of an inquiry signal detection unit of the electronic apparatus of the embodiment.
F1G. 3 is an exemplary view showing the signal waveform of an inquiry signal of Bluetooth (registered trademark) to be processed by the electronic apparatus of the embodiment.
FIG. 4 is an exemplary view showing the characteristic of a first internal bandpass filter of the inquiry signal detection unit of the electronic apparatus of the embodiment.
FIG. 5 is an exemplary view showing the characteristic of a second internal bandpass filter of the inquiry signal detection unit of the electronic apparatus of the embodiment.
FIG. 6 is an exemplary view showing the signal waveform of a normal communication signal (D1 packet) of Bluetooth (registered trademark) to be processed by the electronic apparatus of the embodiment.
FIG. 7 is an exemplary view showing the frequency characteristic of the signal waveform shown in FIG. 6.
FIG. 8 is an exemplary view showing the signal waveform of a signal whose pulse width is shaped by an internal pulse width changing unit of the inquiry signal detection unit of the electronic apparatus of the embodiment.
FIG. 9 is an exemplary view showing the frequency characteristic of the signal waveform shown in FIG. 8.
FIG. 10 is an exemplary flowchart showing the operation principle of the inquiry signal detection unit of the electronic apparatus of the embodiment.

Various embodiments will be described hereinafter with reference to the accompanying drawings.

In general, according to one embodiment, an electronic apparatus includes an antenna, a wireless communication module and a power saving controller. The wireless communication module is configured to execute wireless communication using the antenna. The power saving controller is configured to turn on the wireless communication module in a power-off state when a predetermined signal formed by a predetermined frequency component is received via the antenna. The power saving controller comprises a bandpass filter, a pulse width detector and a pulse width changing module. The bandpass filter is configured to detect the predetermined frequency component. The pulse width detector is configured to detect a pulse width of a received signal via the antenna. The pulse width changing module is configured to change the pulse width of the received signal to be supplied to the bandpass filter to a pulse width not more than a predetermined pulse width, when the detected pulse width of the received signal detected by the pulse width detector exceeds the predetermined pulse width.

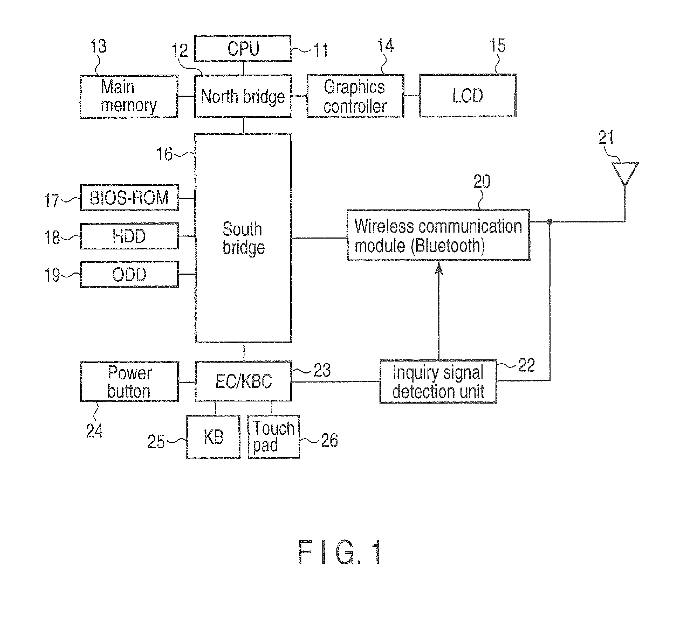

FIG. 1 shows the system configuration of an electronic apparatus according to the embodiment. This electronic apparatus is implemented as, e.g., a portable personal computer drivable by a battery.

As shown in FIG. 1, this electronic apparatus includes, e.g., a CPU 11, north bridge 12, main memory 13, graphics controller 14, LCD (Liquid Crystal Display) 15, south bridge 16, BIOS (Basic Input/Output System) ROM (Read Only Memory) 17, HDD (Hard Disk Drive) 18, ODD (Optical Disc Drive) 19, wireless communication module 20, antenna 21, inquiry signal detection unit 22, EC/KBC (Embedded Controller/KeyBoard Controller) 23, power button 24, keyboard 25, and touch pad 26.

The CPU 11 is a processor for controlling the operation of this electronic apparatus, and executes an operating system (OS) for managing the resources, and various application programs including utilities that operate under the control of the OS. The OS and various application programs are loaded from the HDD 18 or ODD 19 to the main memory 13. The CPU 11 also executes a BIOS stored in the BIOS ROM 17. The BIOS is a program for controlling hardware.

The north bridge 12 operates as a bridge for connecting the CPU 11 and south bridge 16, and also operates as a memory controller for controlling access to the main memory 13. In addition, the north bridge 12 includes a function of communicating with the graphics controller 14. The graphics controller 14 is a display controller for controlling the LCD 15 to be used as a display monitor of this electronic apparatus.

The south bridge 16 contains an IDE (Integrated Device Electronics) controller for controlling the HDD 18 and ODD 19. Also, the wireless communication module 20 is connected to the south bridge 16 via, e.g., a USB (Universal Serial Bus).

The wireless communication module 20 executes wireless communication complying with the Bluetooth (registered trademark) standards via the antenna 21. This electronic apparatus includes a power saving function of, e.g., turning off the screen of the LCD 15 if the keyboard 25 or touch pad has not been operated for a predetermined time. For this power saving, this electronic apparatus turns off the wireless communication module 20 while no wireless communication is executed. The inquiry signal detection unit 22 is a circuit for detecting a Bluetooth (registered trademark) inquiry signal (instead of the wireless communication module 20), and turning on the wireless communication module 20 in a power-off state by using the detection of the inquiry signal as a trigger. Since the power consumption of the inquiry signal detection unit 22 is much lower than that of the wireless communication module 20, the power consumption of this electronic apparatus can largely be reduced.

If the inquiry signal detection unit 22 falsely detects, e.g., a normal communication signal as the inquiry signal, the wireless communication module 20 in the power-off state is uselessly turned on. Therefore, this electronic apparatus includes a mechanism for preventing, e.g., the normal communication signal from being falsely detected as the inquiry signal. This mechanism will be described in detail later.

The EC/KBC 23 is a one-chip microcomputer obtained by integrating a built in controller for power management and a keyboard controller for controlling the keyboard 25 and touch pad 26. The EC/KBC includes a function of turning on or off this electronic apparatus in accordance with the operation of the power button 24. When detecting the inquiry signal of Bluetooth (registered trademark), the inquiry signal detection unit 22 notifies the EC/KBC 23 of this information, thereby turning on the wireless communication module 20. In addition, the inquiry signal detection unit 22 supplies a signal for notifying the detection of the inquiry signal to the wireless communication module 20.

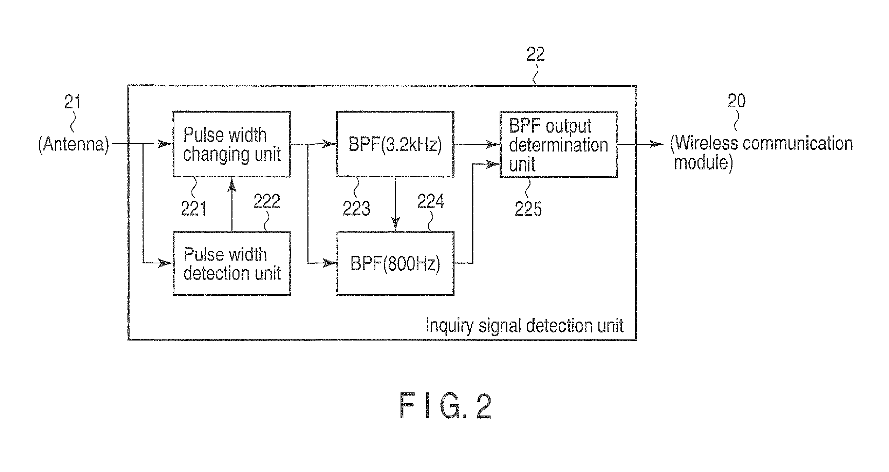

FIG. 2 is an exemplary view showing the functional blocks of the inquiry signal detection unit 22. As shown in FIG. 2, the inquiry signal detection unit 22 includes a pulse width changing unit 221, a pulse width detection unit 222, a bandpass filter (BPF) 223, a bandpass filter (BPF) 224, and a BPF output determination unit 225.

First, to help understand the mechanism by which the inquiry signal detection unit 22 prevents, e.g., the normal communication signal from being falsely detected as the inquiry signal, an event example that provokes false detection like this will be explained.

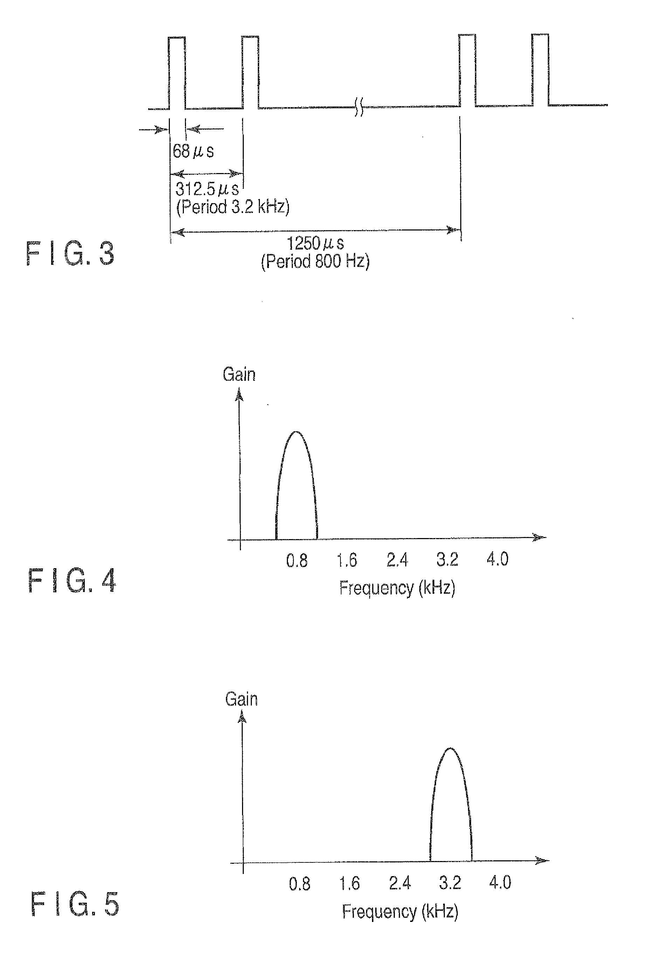

FIG. 3 shows the inquiry signal of Bluetooth (registered trademark). As shown in FIG. 3, the inquiry signal is formed by frequency components of 800 Hz and 3.2 kHz. Therefore, the BPFs 223 and 224 respectively capable of detecting components of 800 Hz and 3.2 kHz detect these frequency components, and the BPF output determination unit 225 executes inquiry signal detection based on the detection results. FIG. 4 and FIG. 5 respectively show the frequency characteristics of the BPFs 223 and 224.

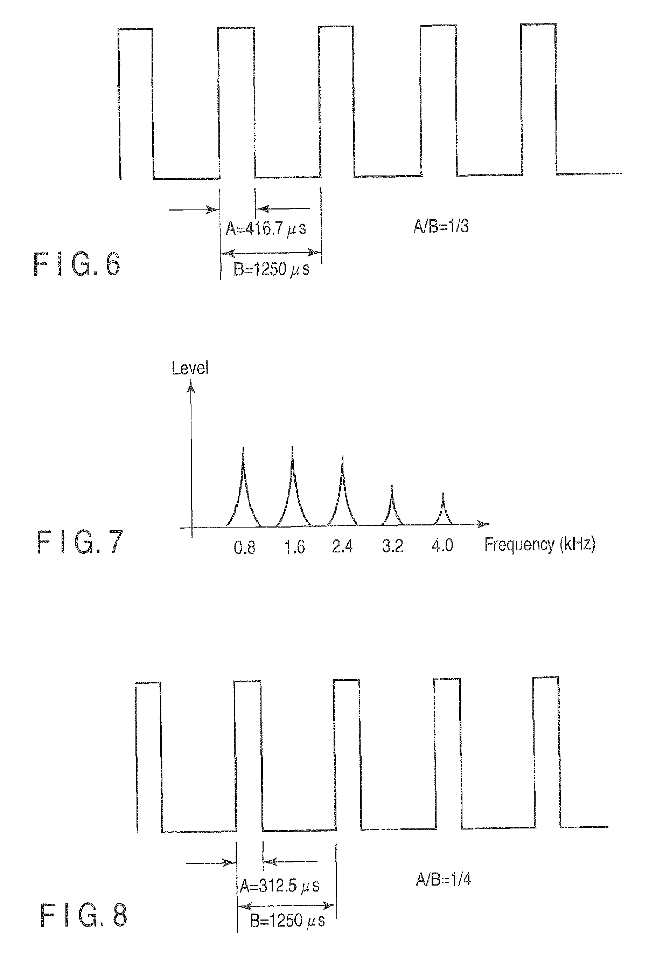

Assume that a transmission signal of a D1 packet as a transmission packet to be transmitted during data communication of actual Bluetooth (registered trademark) communication is formed as shown in FIG. 6. More specifically, assume that a duty fluctuation occurs and the pulse width of the fluctuation exceeds 1/4 (312.5 µs) of the period (1,250 µs) of 800 Hz. The frequency characteristic of this signal can be expressed as shown in FIG. 7.

Since the D1 packet transmission signal is transmitted by a pulse having the period of 800 Hz, the frequency components of the signal have the second, third, and fourth harmonic components. That is, a component of 3.2 kHz (as the fourth harmonic) is contained. Therefore, if the pulse width exceeds 1/4 of the period of 800 Hz, both the BPFs 223 and 224 for respectively detecting 800 Hz and 3.2 kHz used in inquiry signal detection may detect the frequency components. Consequently, the BPF output determination unit 225 falsely determines that the inquiry signal of Bluetooth (registered trademark) is detected.

Accordingly, in the inquiry signal detection unit 22 of this electronic apparatus, the pulse width detection unit 222 detects the pulse width of an input signal. If the pulse width detection unit 222 detects that the pulse width exceeds 1/4 (312.5 µs) of 1,250 µs as the period of 800 Hz, the pulse width changing unit 221 changes the pulse width to 312.5 µs.

When an input signal is the inquiry signal as shown in FIG. 3, the pulse width is always 312.5 µs or less, so the pulse width is not changed. Therefore, the BPF 223 having a pass band of 3.2 kHz detects a frequency component of 3.2 kHz. Likewise, the BPF 224 having a pass band of 800 Hz detects a frequency component of 800 Hz. Consequently, when the BPF output determination unit 225 ANDs the detection outputs from the BPFs 223 and 224, it is possible to detect the inquiry signal having signal components of 3.2 kHz and 800 Hz.

On the other hand, assume that an input signal is the D1 packet communication signal of normal communication of Bluetooth (registered trademark) as shown in FIG. 6. That is, when the pulse width of an input signal exceeds 1/4 of the period of 800 Hz as shown in FIG. 6, the frequency characteristic contains a signal component of 3.2 kHz as the fourth harmonic of 800 Hz as shown in FIG. 7. In the inquiry signal detection unit 22, therefore, the pulse width changing unit 221 changes (shapes) this input signal to 1/4 (312.5 µs) of 1,250 µs as the period of 800 Hz. FIG. 8 shows the signal having the shaped pulse width.

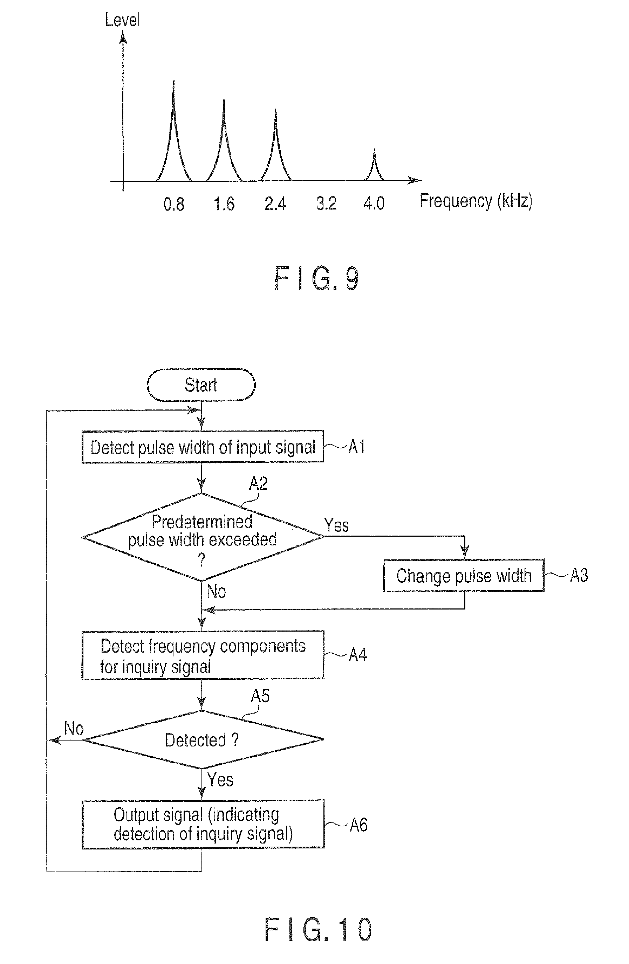

As shown in FIG. 9, a signal component of 3.2 kHz as the fourth harmonic of 800 Hz has decayed in the frequency characteristic of the signal having the shaped pulse width. This signal having the shaped pulse width is input to the 3.2-kHz BPF 223 and 800-Hz BPF 224. As a consequence, a frequency component of 3.2 kHz is not detected. Accordingly, the BPF output determination unit 225 does not detect a signal obtained by ANDing the outputs from the 3.2-kHz BPF 223 and 800-Hz BPF 224. This means that no inquiry signal is detected. That is, false detection of the inquiry signal of Bluetooth (registered trademark) can be prevented.

FIG. 10 is an exemplary flowchart showing the operation principle of the inquiry signal detection unit 22.

First, the pulse width detection unit 222 detects the pulse width of an input signal (block A1). If it is detected that the pulse width of the input signal exceeds a predetermined pulse width (YES in block A2), the pulse width changing unit 221 changes (shapes) the pulse width of the input signal to the predetermined pulse width (block A3).

The BPFs 223 and 224 perform detection of the inquiry signal frequency components (3.2 kHz and 800 Hz) for the input signal (block A4). If both the BPFs 223 and 224 detect the frequency components (YES in block A5), the BPF output determination unit 225 outputs a signal indicating the detection of the inquiry signal (block A6).

As described above, this electronic apparatus includes the mechanism that changes the pulse width of an input signal to 312.5 µs if the inquiry signal detection unit 22 for detecting the inquiry signal of Bluetooth (registered trademark) detects that the pulse width exceeds 1/4 (312.5 µs) of 1,250 µs as the period of 800 Hz. This makes it possible to prevent, e.g., the D1 packet transmission signal of Bluetooth (registered trademark) from being falsely detected as the inquiry signal. That is, the wireless communication module 20 in the power-off state is not uselessly turned on.

## Claims

1. A signal detection circuit for detecting a predetermined signal formed by a predetermined frequency component, comprising:
a bandpass filter (223, 224) configured to detect the predetermined frequency component;
a pulse width detector (222) configured to detect a pulse width of a received signal; and
a pulse width changing module (221) configured to change the pulse width of the received signal to be supplied to the bandpass filter to a pulse width not more than a predetermined pulse width, when the pulse width of the received signal detected by the pulse width detector exceeds the predetermined pulse width.

2. The circuit of Claim 1, **characterized in that** the predetermined signal comprises an inquiry signal of a Bluetooth (registered trademark) formed by frequency components of 800 Hz and 3.2 kHz.

3. The circuit of Claim 2, **characterized in that** the pulse width changing module (221) is configured to change the pulse width of the received signal to a pulse width. not more than 1/4 of a period of 800 Hz, when the pulse width of the received signal detected by the pulse width detector exceeds 1/4 of the period of 800 Hz.

4. The circuit of Claim 2 or 3, **characterized in that** the bandpass filter (223, 224) comprises a first bandpass filter (224) configured to detect a frequency component of 800 Hz, and a second bandpass filter (223) configured to detect a frequency component of 3.2 kHz.

5. The circuit of Claim 4 as dependent on Claim 2, **characterized by** further comprising a determination circuit (225) configured to determine whether the inquiry signal of the Bluetooth (registered trademark) is received, by ANDing a detection signal of the first bandpass filter. (224) and a detection signal of the second bandpass filter (223).

6. An electronic apparatus comprising:
an antenna (21);
a wireless communication module (20) configured to execute wireless communication using the antenna; and
a power saving controller (22) configured to turn on the wireless communication module in a power-off state when a predetermined signal formed by a predetermined frequency component is received via the antenna,
wherein the power saving controller (22) comprises a signal detection circuit according to one of Claims 1 to 5.

7. The apparatus of Claim 6, **characterized in that**:
the wireless communication module (20) is configured to execute wireless communication complying with a Bluetooth (registered trademark) standard; and
the power saving controller (22) is configured to detect an inquiry signal of a Bluetooth (registered trademark) formed by frequency components of 800 Hz and 3.2 kHz.

8. A signal detection method of detecting a predetermined signal formed by a predetermined frequency component, comprising:
detecting (A1) a pulse width of a received signal; and
changing (A3) the pulse width of the received signal to be supplied to a bandpass filter which detects the predetermined frequency component, to a pulse width not more than a predetermined pulse width, when the detected pulse width of the received signal exceeds the predetermined pulse width.

9. The method of Claim 8, **characterized in that** the predetermined signal comprises an inquiry signal of a Bluetooth (registered trademark) formed by frequency components of 800 Hz and 3.2 kHz.

10. The method of Claim 9, **characterized in that** the changing (A3) the pulse width comprises changing the pulse width of the received signal to a pulse width not more than 1/4 of a period of 800 Hz, when the detected pulse width of the received signal exceeds 1/4 of the period of 800 Hz.

11. The method of Claim 9 or 10, **characterized in that** the bandpass filter comprises a first bandpass filter configured to detect a frequency component of 800 Hz, and a second bandpass filter configured to detect a frequency component of 3.2 kHz, and
the method **characterized by** further comprising determining (A4) whether the inquiry signal of the Bluetooth (registered trademark)is received, by ANDing a detection signal of the first bandpass filter and a detection signal of the second bandpass filter.
